# EUROPEAN PATENT APPLICATION

(11) **EP 0 671 122 A1**
(43) Date of publication of application: **13.09.1995**
(21) Application number: 95103573.2
(22) Date of filing: 13.03.1995
(51) Int. Cl.: A01K 47/00, A01K 47/02, A01K 47/06

(54) **Bee hive**

(71) Applicant: Rebizzi, Luisa, 35010 Villa del Conte (IT)
(72) Inventor: Rebizzi, Luisa, 35010 Villa del Conte (IT)
(74) Representative: Gustorf, Gerhard, Dipl.-Ing.

(57) **Abstract**

The invention is a new hive which has also a rear door (P).

Honeycombs (F) are placed on a sliding support (T) which can move through the rear door (P), so that the accordion opening of honeycombs is ensured. In this way, it is possible to gain access to each honeycomb, with no need to extract it.

Moreover, the hive is provided with thermal-insulated walls (H) to maintain a suitable temperature both in summer and in winter, and its width can be reduced, so that it can adapt itself to the winter decrease in the population of bees. The frame (F) is modular and made of a plastic material particularly suitable for the fight against Varroa. It is provided with wire-tightening hooks (D) and handles (Ma) to make its use more practical. The hive has one or more walls that are transparent, which allows to look inside the hive with no need to open it. It is provided with a modular cover (C).

## Description

The invention regards the beekeeping sector. In particular, it refers to the hives for bee-breeding.

At present, hives composed of a parallelepiped-shaped wooden container are used, inside which the frames, commonly called honeycombs, are housed vertically. The bottom of the hive consists of a net allowing the change of air and the fall of the wax remains produced by bees. On the upper part of the hive there is a cover, or one or more supers, on which such cover is placed. In the front part, at the bottom of the hive, there is a horizontal slit provided with an alighting board which allows bees to alight on it and enter the hive. In summer, when temperature increases, bees alight on this board and shake their wings in order to air the interior of the hive. In this season, the hive population reaches its maximum with about 40,000 individuals.

In winter the hive population, also called throng, decreases to about 10,000 individuals which occupy a small area in the centre of the hive. As a consequence of this, internal heat tends to be dissipated and, therefore, bees must move continuously to maintain such temperature.

At present, in order to resist thermal dispersion, the lateral honeycombs are removed and replaced by sheets made of paper or other materials. This method does not eliminate thermal dispersion completely. For this reason, bees are compelled to move and, therefore, must feed on honey since they consume energy.

Moreover, in winter each hive occupies the same space as if it were inhabited by a larger population, even if it contains a reduced number of individuals.

In all seasons hives are periodically visited by beekeepers, who check the conditions of bees and of their queen. This operation requires the removal of all the elements placed on the hives (cover and supers) and the vertical extraction of honeycombs. The removal of supers is rather hard and difficult. Furthermore, when supers are put on the ground, the only way out for the bees inside is closed.

In order to get round all the above-mentioned inconveniences, a new type of hive has been designed and carried out.

This new hive has walls made of wood and thermal-insulation material and is provided with a door through which a support, where honeycombs rest, is extracted.

Moreover, it is possible to reduce the width of the hive so that it adapts to the reduced number of honeycombs necessary to the winter population of bees.

The hive walls are composed of two or more wooden panels and of one or more layers of thermal-insulation material interposed between said panels. Also the upper cover can be made of wood and thermal-insulation layers.

In this way, heat transmission between the inside and the outside of the hive is decreased, thus reducing summer overheating and winter cooling.

On one of its sides, preferably on the rear, each hive is provided with a door or a wall that can be opened.

The honeycombs are placed on a frame which keeps them suitably spaced. This frame slides horizontally on guides or rails and can be extracted, together with the honeycombs, through the door or wall that can be opened.

Thanks to this door or wall and to the sliding honeycomb supporting frame, it is possible to gain access to the throng of bees and to their queen, with no need to remove supers.

The front and rear walls and the bottom of the hive, as well as the honeycomb supporting frame, are composed of two or more parts which can be dismantled or which are compenetrating or hinged to each other in such a way as to make it possible to adapt the hive, and therefore its width, to the number of honeycombs required.

The new hive completely solves all the problems and inconveniences that can be found in the known kind of hives. In order to check the bees and their queen, it is not necessary to remove supers through the door or wall that can be opened and the sliding honeycomb support. The internal temperature is maintained constant by means of the thermal-insulation walls. In winter the new hive, and the apiary in particular, occupies a considerably smaller space.

Honeycombs are placed on a supporting frame, which is composed of a bar arranged from one side of the hive to the other and mounted on guides or rails. This bar is provided with vertical pins or pegs. In their turn, honeycombs have a hollow, a seat or a pipe (on the vertical side and preferably in the upper position) suitable for being inserted in the pins or pegs of the bar, so that they can rotate around them.

As a consequence of this, honeycombs can be rotated, that is, accordion-opened, thus facilitating check, cleaning, etc. The honeycomb supporting frame can be removed, together with honeycombs, through the door or wall that can be opened.

By means of such door or wall as well as of the sliding honeycomb support and of the honeycombs that can be accordion opened, it is possible to gain access to the throng of bees, their queen and eggs, with no need to remove supers.

The supers on top of the hive are composed of four walls hinged to each other. When the super is used, the walls are arranged in a rectangle and are put on the hive. When the super is not used, its walls are folded, so that they become adherent to each other, thus reducing their overall dimensions as much as possible.

On the bottom of the cover, inside, there is a blackboard on which all the operations carried out on that hive can be noted.

In Italy and Europe, bees are more and more attacked by new viruses, bacteria, fungi, acari, insects, etc., which carry serious diseases from other non-European countries.

Bees are not protected against these new diseases and, therefore, must be treated with external products, which have usually a chemical base, by their beekeeper.

One of the diseases coming from abroad, which has recently spread to Europe, is due to an acarus called Varroa.

At present, Varroa is fighted with specific medicines or acids, such as the formic and lactic acids. These two acids are well tolerated by bees, especially formic acid, since it is also a natural component of honey. However, the administration of these products must be interrupted suitably ahead of collection, in order to be sure that honey does not contain traces of acid.

These chemical treatments are often used in a slightly incorrect way, with wrong dosages or employing the same filters or supports in general, for several years. This use of the products makes it possible for the acari to adjust to lower dosages and produce stronger strains of acari, making other interventions useless over time.

The incorrect use of all these chemical systems which, therefore, do not produce the desired effect, can also endanger the production of honey and, at any rate, has a negative influence on the apiary ecosystem.

The scientific researchers who aim at defeating Varroa have noticed that this acarus prefers to reproduce in the eggs of drones, rather than in those of workers. Also bees seem to have realized this fact and have adopted the technique of setting up only drone cells in an area of the apiary. In this way, Varroa is isolated in a specific section of the apiary and workers can go on with their usual activity.

The cap of the infected cell will never be opened and, as a consequence of this, both the acarus and the drone will die, thus reducing the population of Varroa.

Therefore, the beekeeper can insert a special frame in the hive, where bees will make the drone cells, and then eliminate it, once Varroa has attacked drones.

This methodology of apiary protection does not affect its ecosystem in any way and, for this reason, there are no repercussions on the colony, on honey production and, therefore, on man.

Nowadays, beekeepers insert a wooden frame in the hive.

This frame is divided into several parts, so that the free space is rather limited. This methodology is used to make bees build greater cells in which the queen will lay drone eggs.

Afterwards, when cells are closed, the beekeeper frees another area of the frame to allow the repetition of this operation, and so on until the frame will be opened completely.

The opening time of the frame areas lasts about two weeks. In this way, by dividing the frame into three parts, when the last part has already been fertilized and the cells have been capped, the first infected area can be removed and the cycle restarted. However, these wooden frames are not easy to transport, insert into and remove from hives. Moreover, the use of wooden frames produces abrupt movements, which are not very suitable for beekeeping, since they do not slide easily.

In the wooden frames used at present, the iron wire necessary for the formation of cells must be manually inserted through holes obtained around the frame, wasting a lot of time. Furthermore, the subdivision of frames is not prearranged to facilitate the work of the beekeeper, thus he has to make several compartments by hand.

The new frame is composed of four or more parts, so as to form a structure where the iron wire is quickly fixed to special hooks.

On the external upper border, the frame is provided with handles, so that it can be easily removed from the hive.

Moreover, it is arranged so that it can be divided into several areas, thus allowing bees to make cells in a small sector of the frame, only.

This solution is adopted because, when building cells, bees consume a lot of honey and therefore wax, thus reducing the production of usable honey.

The frame is preferably made of plastic material, since bees prefer plastics to set up new honeycombs, but also because the plastic surface is smoother and, therefore, slides more easily, allowing softer movements without hive shaking.

The frame is modular and, therefore, can be stored and transported more easily than an ordinary wooden frame sold as a whole, thanks to the possibility of reducing its overall dimensions.

The frame is made of linear elements whose ends have the shape of hollows and/or relieves, so that they can be joined to each other and form a modular frame.

The hive is not always sufficient for the population of bees, especially in summer, when the colony reaches its utmost production.

The hive can be enlarged on its upper or lower part by means of supers which contain, as well as the hives, a certain quantity of honeycombs.

Therefore, the beekeeper must often check the colony inside the hive, also to collect honey at the right moment.

Opening and looking inside the hive are delicate operations which must not be carried out with abrupt movements and which are not always fruitful.

In order to understand when it is time to collect honey or to add the super, the beekeeper is very often forced to open the hive many times, disturbing the swarm, especially if he is a novice.

The invention is composed of a hive provided with one or more transparent walls.

These transparent walls can be placed on the sides and/or on the hive and/or on the super, so that it is possible to see inside with no need to open the hive.

In order to avoid heat dispersion, these transparent walls, which are preferably made of polycarbonate, are double.

In this way, the double glazing ensures a correct isolation from the external environment, both in winter, when the colony decreases and it is cold outside, and in summer, when the colony increases and it is very hot outside.

In summer, when hives are separated from each other, there is a different cover for each of them. In winter, on the contrary, it is possible to make a single cover for several hives placed side by side.

The main advantage of having a single cover in winter is represented by the fact that hives can be placed side by side, avoiding heat dispersion. In this way, bees are not forced to increase their work and, consequently, to consume an excessive quantity of honey to raise the temperature inside the hive.

Therefore, the modular covers can be connected to one another, eliminating the lateral spaces in excess between one hive and the next one.

In this way, it is also possible to gain space, which allows to place the hives in narrower places during the winter.

The following is just an example among many of the invention in question, represented in the enclosed tables.

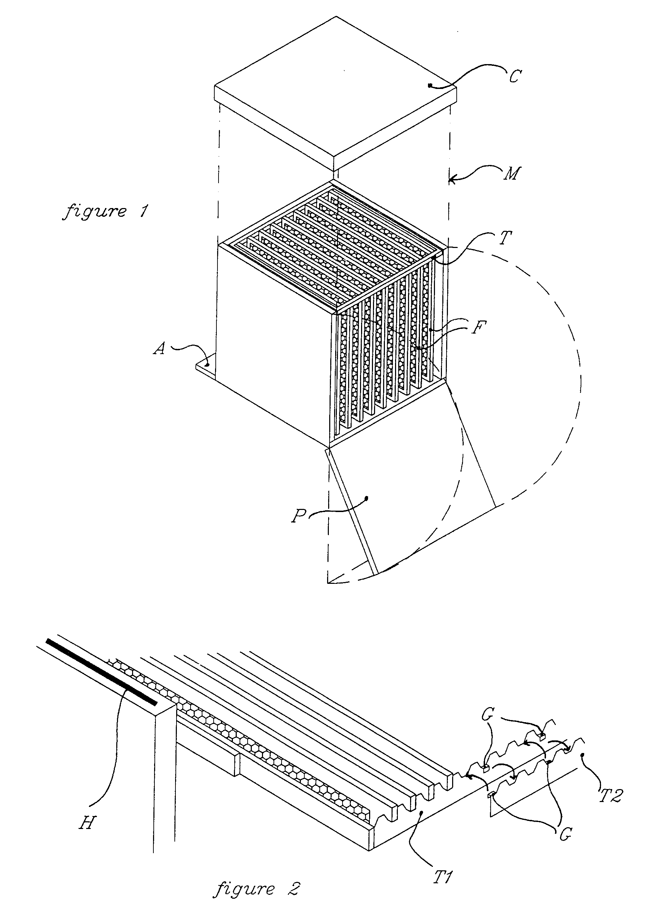

Figure 1 shows the rear view of the hive with a schematization of the cover (C), the honeycombs (F), the honeycomb supporting frame (T) and the front alighting board (A). In this figure it is possible to clearly see the rear wall that can be opened (P) to gain direct access to the honeycombs (F), with no need to remove the cover (C) and possible supers (M, dotted line).

Figure 2 schematically shows the honeycomb support (T) extraction system, in detail, with the lateral guides and the thermal-insulated wall (H). The same figure also represents a practical example of the honeycomb support (T), adjustable in width. The front and rear portion of the honeycomb support frame (T) are divided into two parts (T1, T2), mutually fixed by means of the hooks (G).

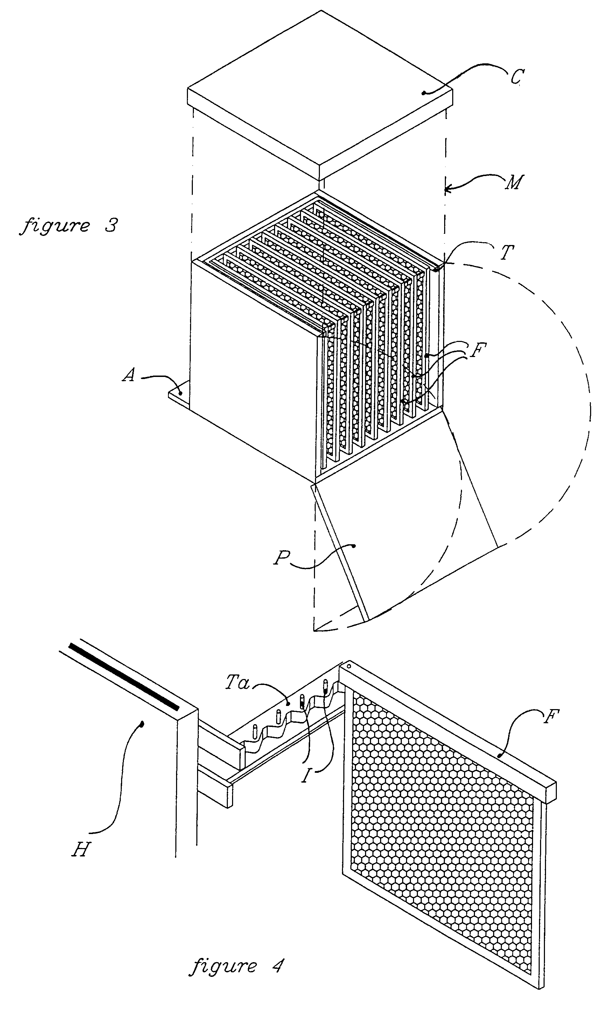

Figure 3 shows the rear view of the hive with a schematization of the cover (C), the honeycombs (F), the honeycomb supporting frame (T) and the front alighting board (A). In this figure, it is possible to clearly see the rear wall that can be opened (P) to gain direct access to the honeycombs (F), with no need to remove the cover (C) and possible supers (M, dotted line).

Figure 4 schematically shows the system of honeycomb support (Ta) extraction, in detail, with the lateral guides and the thermal-insulated wall (H). The same figure also represents the supporting pegs (I) and those for the accordion opening of the honeycombs (F).

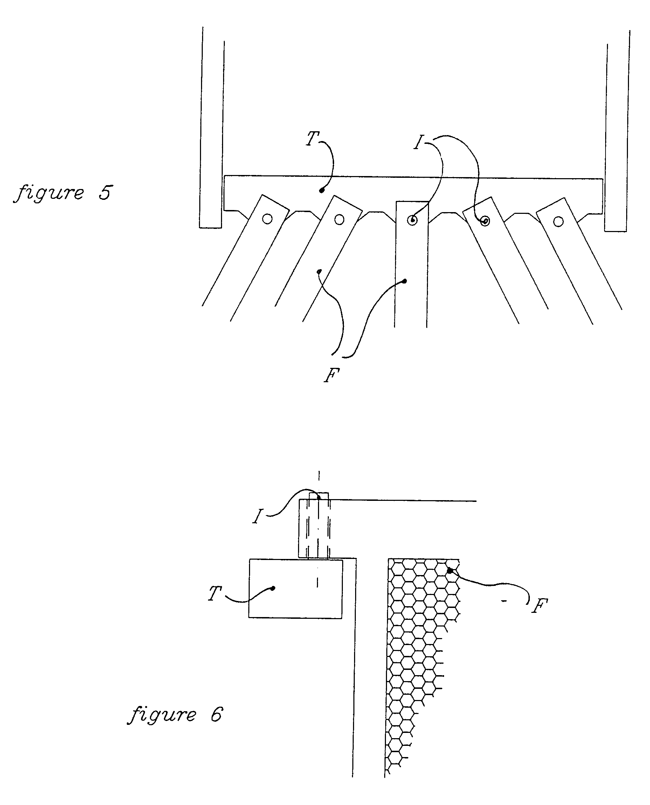

Figures 5 and 6 show a plan and lateral view of the honeycomb support (T) and of the honeycombs (F), where it is possible to see the system used to anchor the honeycombs (F) to the pegs (I) of the honeycomb support (T) and the accordion opening system of the same honeycombs (F).

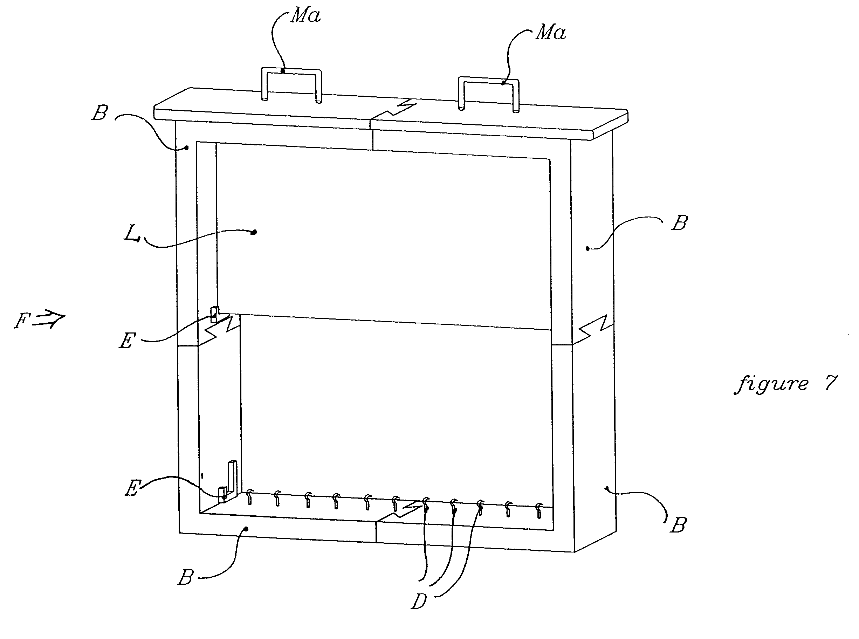

Figure 7 shows a frame made of plastic material, composed of eight different parts. Each part consists of linear elements (B) whose ends are shaped so that they can be joined to the adjacent element. It is possible to see the two fixed handles (Ma) for easy extraction and insertion of the hive frame, and the hooks (D) for tightening the metal wire necessary to bees to make new cells. Moreover, the frame (F) is provided with partitions (E), which allows the same frame (F) to be divided into several sectors by means of the panels (L).

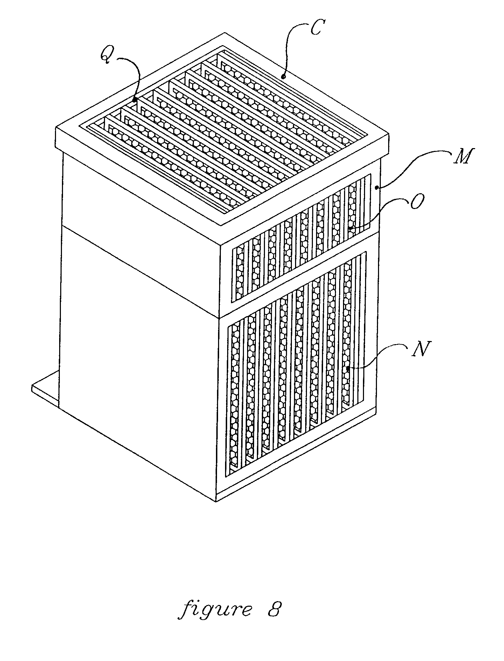

Figure 8 shows a hive on which a super (M), closed by a cover (C) above, is placed.

Both the hive and the super (M) are equipped with a transparent wall, (N) and (O) respectively, where also the cover (C) has a transparent window (Q).

The transparent polycarbonate walls are composed of two parallel sealed surfaces which contain inert gases. These double glazing walls isolate the hive from the external environment, but they allow the beekeeper to look into the hive without necessarily having to open the cover, the hive or the super.

These are the schematic instructions that a skilled person needs to set up the invention. However, changes can be brought about during its practical execution, without affecting the substance of the innovative concept.

Therefore, with reference to the above-mentioned description and the tables herewith enclosed, the following claims are put forth.

## Claims

1. A hive characterized by the fact that it has also a door or a wall that can be opened, preferably on the rear side.

2. A hive as per claim 1, characterized by the fact that honeycombs are placed on a honeycomb support frame sliding on guides or rail to be extracted through the door or the wall that can be opened.

3. A hive characterized by the fact that it has thermal-insulated walls.

4. A hive as per the previous claims, characterized by the fact that its front and rear walls, its bottom and frame have a variable length, so that it is possible to reduce the hive width and contain a lower number of honeycombs when the hive population decreases.

5. A hive as per claim 1, characterized by the fact that honeycombs are placed on a honeycomb supporting frame sliding on guides or rails, to be extracted through the door or the wall that can be opened, and where the honeycomb supporting frame is provided with vertical pegs to which honeycombs are hinged. In this way, it is possible to accordion open these honeycombs.

6. A hive characterized by the fact that a blackboard is placed inside the cover.

7. A modular frame for hives, characterized by the fact that it is composed of four or more linear elements. The ends of each element have the shape of hollows and/or relieves, so that they can be hooked to the adjacent element.

8. A modular frame for hives, characterized by the fact that the upper element is provided with fixed or movable tangs to lift and extract the frame.

9. A modular frame for hives, characterized by the fact that die internal surface of the linear elements is provided with hooks for the passage and fixing of the honeycomb-supporting wire.

10. A hive characterized by the fact that it has one or more transparent double-glazing walls.

11. A hive characterized by the fact that the transparent wall is composed of two polycarbonate surfaces, spaced in the central part and welded on the borders and where the space obtained is filled with gas.

12. A hive characterized by the fact that its cover is modular, so that it can be joined to other covers and form a single one, which can be put on several hives placed side by side.
